# EUROPEAN PATENT SPECIFICATION

(11) **EP 3 681 944 B1**
(45) Date of publication and mention of the grant of the patent: **23.08.2023**
(21) Application number: 18786030.9
(22) Date of filing: 14.09.2018
(51) Int. Cl.: C08L 21/00, C08K 5/20, C08K 7/02, C08L 7/00, C08L 9/00, B60C 1/00

(54) **PNEUMATIC TYRE HAVING A TREAD WITH A POROUS SURFACE**
LUFTREIFEN MIT EINER LAUFFLÄCHE MIT EINER PORÖSEN OBERFLÄCHE
PNEUMATIQUE À BANDE DE ROULEMENT PRÉSENTANT UNE SURFACE POREUSE

(30) Priority: 15.09.2017 IT 201700103274
(43) Date of publication of application: 22.07.2020
(73) Proprietor: Bridgestone Europe NV/SA, 1930 Zaventem (BE)
(72) Inventor: GRENCI, Valeria, 00124 Roma (IT); ROSELLI, Alessandro, 00128 Roma (IT)
(74) Representative: Marchetti, Alessio
(86) International application number: PCT/IB2018/057067
(87) International publication number: WO 2019/053652

(56) References cited:
- EP-A1- 1 048 691
- EP-A1- 1 900 548
- EP-A1- 2 371 580
- EP-A1- 2 698 397
- EP-A1- 2 799 484
- WO-A2-2015/015421
- DATABASE WPI Week 201323 Thomson Scientific, London, GB; AN 2013-E24484 XP002779354, & JP 2013 056992 A (BRIDGESTONE CORP) 28 March 2013 (2013-03-28)

## Description

### CROSS-REFERENCE TO RELATED APPLICATIONS

This application claims priority from Italian Patent Application No. 102017000103274 filed on 15/09/2017, the disclosure of which is incorporated by reference.

### TECHNICAL FIELD

The present invention relates to a compound for the preparation of a tread with a porous surface.

### BACKGROUND ART

Historically, in order to ensure the traction of the pneumatic tyre on snow or ice (in winter conditions), the tread in question is equipped with gripping elements, such as studs.

This solution, notwithstanding whether it is capable of ensuring the traction of the pneumatic tyre in winter conditions, nevertheless turns out to be disadvantageous under conditions other than those of winter, thereby forcing the user to have to change the pneumatic tyres should the conditions no longer be those of winter.

In order to provide pneumatic tyres that would be usable under both winter conditions and other conditions (absence of snow or ice), treads with a porous surface were introduced. The presence of pores makes it possible to increase the contact surface area between the tread and the road and to create a path for the layer of water that forms between the tread and the road to flow away, thereby rendering it particularly suitable also in the event of rain.

Generally, the approach used in the rubber industry in order to obtain a tread with a porous surface is that of introducing specific chemical agents (blowing agents) to the compound being prepared, which are capable of creating chemical reactions during the vulcanization step that bring about the release of compounds in the gaseous state and that are responsible for the formation of pores.

Today, such a solution suffers the disadvantage in relation both to the fact that the blowing agents used generally turn out to be hazardous to the health of the operators and to the environment and to the fact that the pores can represent mechanically weak points in the tread.

The need was therefore felt to be able to provide a solution that guarantees the manufacture of a tread with a porous surface but without, in so doing, incurring the disadvantages of the prior art.

### DISCLOSURE OF INVENTION

The object of the present invention is a compound for manufacturing a tread for pneumatic tyres comprising at least one cross-linking unsaturated-chain polymeric base suitable for assuming the chemical/physical and mechanical characteristics of an elastomer following cross-linking, a filler, a vulcanization system and a reinforced porosity system; said compound being characterized in that said reinforced porosity system comprises a compound of the general the formula (I) and a reinforcement fiber made of a combination of polyethylene functionalized with ethylene vinyl alcohol (EVOH) and a hydrophilic compound; 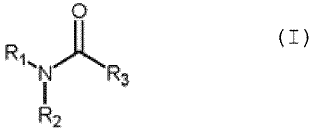 wherein, R₁, R₂ and R₃ identical or different from each other are chosen from the group composed of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃) ₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃) ₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃) ₃CC₆H₄X, CH₂C₆H₄CHX, NH₂C₆H₁₀X, OHC(CH₃) ₂X, NHC₅H₉X, NHC₅H₉NC₅H₉X, NH₂CH₂C₇H₁₂X, OHC₆H₁₀X, NHCH₂C₆H₃C₃H₂X, where X can be O or S; said compound of the general formula (I) and said reinforcement fiber being present in the compound in a phr ratio between 0.5 and 2.0.

Here and hereinafter, the term "reinforced porosity system" means a combination of compounds suitable for manufacturing the formation within the tread of structurally reinforced pores during the vulcanization step of the pneumatic tyre.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Here and hereinafter, vulcanization system refers to a complex of ingredients comprising at least sulfur and accelerating compounds, that in the preparation of the compound are added in a final mixing stage and have the purpose of promoting the vulcanization of the polymer base once the compound is subjected to a vulcanization temperature.

Preferably, R₁ and R₂ are H and R₃ is NH₂.

Preferably, in said reinforcement fiber the hydrophilic compound is covered with polyethylene.

Preferably, both said compound of the general formula (I) and said reinforcement fiber are present within the compound in a quantity of between 2 and 10 phr.

Preferably, said reinforced porosity system is added to the compound being prepared during the productive mixing step.

A further object of the present invention is a tread portion being manufactured with the compound of the present invention.

A still further object of the present invention is a pneumatic tyre comprising a tread portion manufactured with the compound, object of the present invention.

A further object of the present invention is a method for the preparation of a compound for the manufacture of a tread with a porous surface for pneumatic tyres; said method comprising (i) a non-productive mixing step wherein are mixed together a cross linking unsaturated chain polymer base suitable for assuming the chemical-physical and mechanical characteristics of an elastomer following cross-linking and at least one filler and (ii) a productive mixing step wherein a vulcanization system is added to and mixed with the compound being prepared; said method being characterized in that during said productive mixing step a reinforced porosity system is added comprising a compound of the general formula (I) and a reinforcing fiber made of a combination of polyethylene functionalized with ethylene vinyl alcohol (EVOH) with a hydrophilic compound; 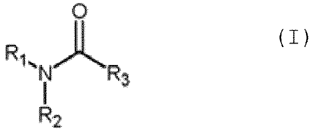 wherein, R₁, R₂ and R₃ identical or different from each other are chosen from the group composed of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃) ₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃) ₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃) ₃CC₆H₄X, CH₂C₆H₄CHX, NH₂C₆H₁₀X, OHC(CH₃) ₂X, NHC₅H₉X, NHC₅H₉NC₅H₉X, NH₂CH₂C₇H₁₂X, OHC₆H₁₀X, NHCH₂C₆H₃C₃H₂X, where X can be O or S; said compound of the general formula (I) and said reinforcement fiber being present in the compound in a phr ratio between 0.5 and 2.0.

Here and hereinafter the term "non-productive mixing step" refers to a mixing step wherein, to the cross-linkable unsaturated chain polymer base are added and mixed the ingredients of the compound with the exception of the vulcanization system; while the term "productive mixing step" refers to a mixing step wherein the vulcanization system is added to and blended in the compound being prepared.

### BEST MODE FOR CARRYING OUT THE INVENTION

For a better understanding of the invention, the following examples are for illustrative and non-limiting purposes.

### EXAMPLES

There were two comparison compounds (A and B) and a compound of the invention (C). The first comparison compound (A) is a tread compound without the reinforced porosity system, while the second comparison compound (B) is a tread compound whose reinforced porosity system comprises the lone general formula compound (I) as defined in the claims, therefore, without the presence of the reinforcement fiber made of the functionalized polyethylene with hydrophilic groups.

The example compounds were obtained according to the procedure below:
- preparation of the compounds -

### (1^{st} mixing step)

Before the start of the mixing, a mixer with tangential rotors and an internal volume of between 230 and 270 liters was loaded with the cross-linkable polymer base, the recycled rubber, the silica, a silane bonding agent, the carbon black, the resin and the process oil reaching a fill factor of 66-72%.

The mixer was operated at a speed of between 40-60 revolutions/minute, and the mixture thus formed was discharged once a temperature of between 140-160 °C had been reached.

### (final mixing step)

Sulfur and the vulcanization agents, and just for compounds B and C, the reinforced porosity system and antioxidants were added to the mixture obtained from the previous step, reaching a fill factor of between 63-67%.

The mixer was operated at a speed of between 20-40 revolutions/minute, and the mixture thus formed was discharged once a temperature of between 90-110 °C had been reached.

Table I shows the compositions in phr of the three compounds.

**TABLE I**

| | | A | B | C |
|---|---|---|---|---|
| NR | | 45 | | |
| BR | | 55 | | |
| CB | | 35 | | |
| Silica | | 42 | | |
| Silane bonding agent | | 3.4 | | |
| Resin | | 10 | | |
| Oil | | 20 | | |
| Reinforced porosity system | Compound of the general formula (I) | -- | 4 | 4 |
| | Reinforcement fiber | -- | -- | 3 |
| Sulfur | | 2.0 | | |
| Vulcanization agents | | 1.5 | | |
| Antioxidant agents | | 1.5 | | |

CB is carbon black identified by the letters N134.

The silica used is ULtrasil 5500 GR marketed by Evonik.

The silane binding agent used is Si75.

The resin used is marketed under the name HIKOTACK P90 by the company Kolon Chemical CO LTD

The process oil used is marketed under the name Nytex 832 by the company Nynas

The compound of the general formula (I) used is urea (NH₂CONH₂) .

The reinforced fiber used is polyethylene combined with ethylene vinyl alcohol (EVOH) and marketed under the commercial code name S833 10T3 by the company KURARAY CO., LTD

The vulcanization agents consist of MBTS and CBS.

The antioxidant agents consist of TMQ and 6PPD

It was experimentally verified that compound B and C produce tread strips exhibiting a porosity with pores having an average surface area equal to 5 mm².

Respective samples were drawn from compounds A - C that, once vulcanized, were subjected to tests in order to be able to assess the wet traction (wet grip in IR), winter performance (winter in the IR), dry traction (dry grip in the IR), the rolling resistance and the resistance to wear.

Compounds A - E prepared above were subjected to the dynamicity test according to the ASTM D5992 and the wear test based on DIN abrader according to the ASTM 5963 standard.

As is known in the art, the values of TanD at 0°C, of E' at -20°C and of E' at 30°C are respectively indicative of the wet grip index, of the ice and of the snow conditions grip index and of the dry grip index. Furthermore, the values of TanD at 60°C are strictly correlated to the rolling resistance (the less the value of TanD at 60°C, the greater the rolling resistance).

Recorded in Table II are the values of the characteristics indexed to compound A.

**TABLE II**

| | A | B | C |
|---|---|---|---|
| Wet grip | 100 | 106 | 111 |
| Traction on dry pavement | 100 | 93 | 98 |
| Winter performance | 100 | 107 | 112 |
| Rolling resistance | 100 | 100 | 105 |
| Abrasion resistance | 100 | 89 | 100 |

As is evident from the data of Table II, compared to the first comparison compound (compound A), the compound obtained with the compound that is the object of the present invention (compound c) shows an overall improvement in those characteristics in relation to the road traction in different situations. Furthermore, from a comparison of the data in relation to comparison compound B and to the compound of the invention, C, it appears clear how the presence of the reinforcing compound turns out to be fundamental in obtaining the further advantage in relation to the rolling resistance.

In conclusion, the compound that is the object of the present invention, by virtue of the attainment of a porosity obtained via the participation of a reinforcing fibre, is able to ensure improved road traction under different conditions (dry, wet and winter) together with improved resistance to abrasion.

## Claims

1. Compound for the manufacturing of a tread for pneumatic tyres comprising at least one cross-linking unsaturated chain polymer base suitable for assuming the chemical/physical and mechanical characteristics of an elastomer following cross-linking, a filler, a vulcanization system and a reinforced porosity system; said compound being **characterized in that** said reinforced porosity system comprises a compound of the general formula (I) and a reinforcement fiber made of a combination of polyethylene functionalized with ethylene vinyl alcohol (EVOH) and a hydrophilic compound; 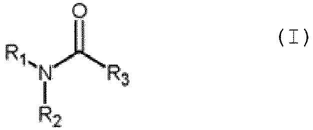 wherein, R₁, R₂ and R₃ identical or different from each other are chosen from the group composed of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃) ₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃) ₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃) ₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, where X can be O or S; said compound of the general formula (I) and said reinforcement fiber being present in the compound in a phr ratio between 0.5 and 2.0.

2. Compound for the manufacturing of a tread according to claim 1, **characterized in that** R₁ and R₂ are H and R₃ is NH₂.

3. Compound for the manufacturing of a tread according to claim 1 or 2, **characterized in that** in said reinforcement fiber the hydrophilic compound is covered with polyethylene.

4. Compound for the manufacturing of a tread according to one of the preceding claims, **characterized in that** both said compound of the general formula (I) and said reinforcement fiber are present within the compound in a quantity between 2 and 10 phr.

5. Compound for the manufacturing of a tread according to one of the preceding claims, **characterized in that** said reinforced porosity system is added to the compound being prepared during a productive mixing step.

6. Portion of tread manufactured using the compound according to one of the preceding claims.

7. Pneumatic tyre comprising a tread portion according to claim 6.

8. Method for the preparation of a compound for the manufacture of a tread with a porous surface for pneumatic tyres; said method comprising (i) a non-productive mixing step wherein are mixed together a cross linking unsaturated chain polymer base suitable for assuming the chemical-physical and mechanical characteristics of an elastomer following cross-linking and at least one filler and (ii) a productive mixing step wherein a vulcanization system is added to and mixed with the compound being prepared; said method being **characterized in that** during said productive mixing step a reinforced porosity system is added comprising a compound of the general formula (I) and a reinforcing fiber made of a combination of polyethylene functionalized with ethylene vinyl alcohol (EVOH) with a hydrophilic compound; 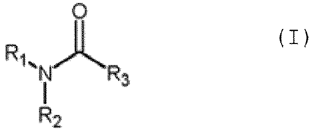 wherein, R₁, R₂ and R₃ identical or different from each other are chosen from the group composed of: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃) ₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃) ₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃) ₂X, NHC₅H₉X, NHC₅H₉NC₅H₉X, NH₂CH₂C₇H₁₂X, OHC₆H₁₀X, NHCH₂C₆H₃C₃H₂X, where X can be O or S; said compound of the general formula (I) and said reinforcement fiber being present in the compound in a phr ratio between 0.5 and 2.0.

## Patentansprüche

1. Mischung für die Herstellung einer Lauffläche für Luftreifen, umfassend mindestens eine vernetzende ungesättigte Polymerkettenbasis, die zum Annehmen der chemischen/physikalischen und mechanischen Eigenschaften eines Elastomers nach einer Vernetzung geeignet ist, einen Füllstoff, ein Vulkanisationssystem und ein verstärktes Porositätssystem; wobei die Mischung **dadurch gekennzeichnet ist, dass** das verstärkte Porositätssystem eine Mischung der allgemeinen Formel (I) und eine Verstärkungsfaser umfasst, die aus einer Kombination von mit Ethylenvinylalkohol (EVOH) funktionalisiertem Polyethylen und einer hydrophilen Mischung gefertigt ist; 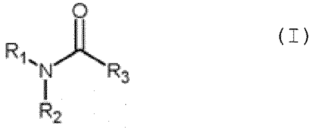 wobei R₁, R₂ und R₃ gleich oder verschieden voneinander aus der Gruppe ausgewählt sind, bestehend aus: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X,C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, wobei X O oder S sein kann; wobei die Mischung der allgemeinen Formel (I) und die Verstärkungsfaser in der Mischung in einem phr-Verhältnis zwischen 0,5 und 2,0 vorhanden sind.

2. Mischung für die Herstellung einer Lauffläche nach Anspruch 1, **dadurch gekennzeichnet, dass** R₁ und R₂ H sind und R₃ NH₂ ist.

3. Mischung für die Herstellung einer Lauffläche nach Anspruch 1 oder 2, **dadurch gekennzeichnet, dass** in der Verstärkungsfaser die hydrophile Mischung mit Polyethylen bedeckt ist.

4. Mischung für die Herstellung einer Lauffläche nach einem der vorstehenden Ansprüche, **dadurch gekennzeichnet, dass** sowohl die Mischung der allgemeinen Formel (I) als auch die Verstärkungsfaser innerhalb der Mischung in einer Menge zwischen 2 und 10 phr vorhanden sind.

5. Mischung für die Herstellung einer Lauffläche nach einem der vorstehenden Ansprüche, **dadurch gekennzeichnet, dass** das verstärkte Porositätssystem zu der Mischung hinzugefügt wird, die während eines produktiven Mischungsschritts zubereitet wird.

6. Abschnitt der Lauffläche, die unter Verwendung der Mischung nach einem der vorstehenden Ansprüche hergestellt wird.

7. Luftreifen, umfassend einen Laufflächenabschnitt nach Anspruch 6.

8. Verfahren für die Zubereitung einer Mischung für die Herstellung einer Lauffläche mit einer porösen Oberfläche für Luftreifen; das Verfahren umfassend: (i) einen nicht produktiven Mischungsschritt, wobei eine vernetzende ungesättigte Polymerkettenbasis, die zum Annehmen der chemisch-physikalischen und mechanischen Eigenschaften eines Elastomers nach der Vernetzung geeignet ist, und mindestens ein Füllstoff zusammengemischt werden, und (ii) einen produktiven Mischungsschritt, wobei ein Vulkanisationssystem zu der Mischung, die zubereitet wird, hinzugefügt und damit gemischt wird; wobei das Verfahren **dadurch gekennzeichnet ist, dass** ein verstärktes Porositätssystem während des produktiven Mischungsschritts hinzugefügt wird, umfassend eine Mischung der allgemeinen Formel (I) und eine Verstärkungsfaser, die aus einer Kombination von mit Ethylenvinylalkohol (EVOH) funktionalisiertem Polyethylen mit einer hydrophilen Mischung gefertigt ist; 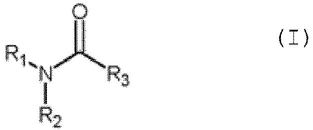 wobei R₁, R₂ und R₃ gleich oder verschieden voneinander aus der Gruppe ausgewählt sind, bestehend aus: H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X,C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, wobei X O oder S sein kann; wobei die Mischung der allgemeinen Formel (I) und die Verstärkungsfaser in der Mischung in einem phr-Verhältnis zwischen 0,5 und 2,0 vorhanden sind.

## Revendications

1. Composé pour la fabrication d'une bande de roulement pour pneumatiques comprenant au moins une base polymère de chaîne insaturée de réticulation appropriée pour prendre les caractéristiques physico-chimiques et mécaniques d'un élastomère à la suite d'une réticulation, une charge, un système de vulcanisation et un système de porosité renforcée ; ledit composé étant **caractérisé en ce que** ledit système de porosité renforcée comprend un composé de la formule générale (I) et une fibre de renfort constituée d'une combinaison de polyéthylène fonctionnalisé avec de l'alcool éthylène-vinylique (EVOH) et un composé hydrophile ; 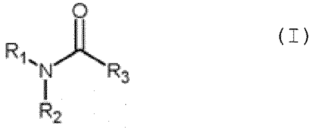 dans lequel, R₁, R₂ et R₃ identiques ou différents l'un de l'autre sont choisis dans le groupe constitué par : H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, dans lequel X peut être O ou S ; ledit composé de formule générale (I) et ladite fibre de renfort étant présents dans le composé dans un rapport de pcr entre 0,5 et 2,0.

2. Composé pour la fabrication d'une bande de roulement selon la revendication 1, **caractérisé en ce que** R₁ et R₂ sont H et R₃ est NH₂.

3. Composé pour la fabrication d'une bande de roulement selon la revendication 1 ou 2, **caractérisé en ce que** dans ladite fibre de renfort, le composé hydrophile est couvert de polyéthylène.

4. Composé pour la fabrication d'une bande de roulement selon l'une des revendications précédentes, **caractérisé en ce que** l'un et l'autre dudit composé de la formule générale (I) et de ladite fibre de renfort sont présents au sein du composé en une quantité entre 2 et 10 pcr.

5. Composé pour la fabrication d'une bande de roulement selon l'une des revendications précédentes, **caractérisé en ce que** ledit système de porosité renforcée est ajouté au composé en cours de préparation pendant une étape de mélange productive.

6. Partie de bande de roulement fabriquée à l'aide du composé selon l'une des revendications précédentes.

7. Pneumatique comprenant une partie de bande de roulement selon la revendication 6.

8. Procédé pour la préparation d'un composé pour la fabrication d'une bande de roulement avec une surface poreuse pour pneumatiques ; ledit procédé comprenant (i) une étape de mélange non productive dans lequel sont mélangées entre elles une base polymère de chaîne insaturée de réticulation appropriée pour prendre les caractéristiques physico-chimiques et mécaniques d'un élastomère à la suite d'une réticulation et au moins une charge (ii) et une étape de mélange productive dans lequel un système de vulcanisation est ajouté à et mélangé avec le composé en cours de préparation ; ledit composé étant **caractérisé en ce que** ledit système de porosité renforcée comprend un composé de la formule générale (I) et une fibre de renfort constituée d'une combinaison de polyéthylène fonctionnalisé avec de l'alcool éthylène-vinylique (EVOH) et un composé hydrophile ; 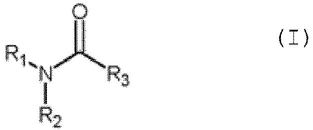 dans lequel, R₁, R₂ et R₃ identiques ou différents l'un de l'autre sont choisis dans le groupe constitué par : H, CH₃, CH₃CH₂, CH₃CH₂CH₂, CH₃CH₂CH₂CH₂, CH₂CHCHCH, CH₃CH₃CH, C₆H₅, C₆H₁₁, C₁₀H₇, CH₃C₆H₄CH₃, CH₃CH₂C₆H₅, C₆H₄OH, C₄H₅O₂, CH₃C₆H₄OCH₃, CH₃OC₆H₄OCH₃, NH₂, C₆H₄NH₂, C₄H₇NH, C₆H₁₀NH₂, C(CH₃)₂OH, C₅H₉NH, NH₂CH₂C₇H₁₂, CHCHOCH₂C₆H₅, C₆H₁₀OH, CH₂C₆H₃C₃H₂NH, SO₃C₆H₄CH₃, C₆H₄NO₂, C₆H₁₁, C₁₀H₇, C₆H₄OH, CH₃OC₆H₄, (CH₃)₃CC₆H₄, CH₃C₆H₃NO₂, (CH₂)₃Cl, CH₃X, CH₃CH₂X, CH₃CH₂CH₂X, CH₃CH₂CH₂CH₂X, C₆H₅X, C₆H₅CH₂X, (CH₃)₃CX, C₄H₃X, CH₂CHCH₂X, C₆H₄SO₃CH₃X, C₆H₄NO₂X, C₆H₁₁X, C₁₀H₇X, OHCH₂CH₂X, OHC₄H₄X, CH₃OC₆H₄X, (CH₃)₃CC₆H₄X, CH₂C₆H₄CHX, NH₂C₆H₁₀X, OHC(CH₃)₂X, NHC₅H₉X, NHC₅H₉NC₅H₉X, NH₂CH₂C₇H₁₂X, OHC₆H₁₀X, NHCH₂C₆H₃C₃H₂X, dans lequel X peut être O ou S ; ledit composé de formule générale (I) et ladite fibre de renfort étant présents dans le composé dans un rapport de pcr entre 0,5 et 2,0.
